# EUROPÄISCHE PATENTSCHRIFT

(11) **EP 2 837 262 B1**
(45) Veröffentlichungstag und Bekanntmachung des Hinweises auf die Patenterteilung: **09.01.2019**
(21) Anmeldenummer: 13727020.3
(22) Anmeldetag: 15.04.2013
(51) Int. Cl.: H05B 33/08, H02M 1/42, H05B 41/28, H05B 41/285, H05B 41/292, H05B 41/298

(54) **VERFAHREN ZUM BETREIBEN EINES LLC-RESONANZWANDLERS FÜR EIN LEUCHTMITTEL, WANDLER UND LED-KONVERTER**
METHOD FOR OPERATING AN LLC RESONANT CONVERTER FOR AN ILLUMINANT, CONVERTER AND LED CONVERTER
PROCÉDÉ PERMETTANT DE FAIRE FONCTIONNER UN TRANSDUCTEUR À RÉSONANCE LLC POUR UN MOYEN D'ÉCLAIRAGE, TRANSDUCTEUR ET CONVERTISSEUR POUR DEL

(30) Priorität: 13.04.2012 DE 102012007449
(43) Veröffentlichungstag der Anmeldung: 18.02.2015
(73) Patentinhaber: Tridonic GmbH & Co. KG, 6851 Dornbirn (AT)
(72) Erfinder: MARENT, Günter, 6780 Bartholomäberg (AT); VONACH, Christoph, 6850 Dornbirn (AT)
(74) Vertreter: Banzer, Hans-Jörg
(86) Internationale Anmeldenummer: PCT/AT2013/000068
(87) Internationale Veröffentlichungsnummer: WO 2013/152371

(56) Entgegenhaltungen:
- EP-A2- 2 252 133
- WO-A1-2008/151800
- DE-A1-102005 018 761
- DE-A1-102009 030 106
- DE-A1-102010 031 244
- US-A1- 2007 291 423

## Beschreibung

Die Erfindung betrifft einen Wandler zur Versorgung eines Leuchtmittels, einen LED-Konverter und ein Verfahren zum Betreiben eines derartigen Wandlers. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen bei Betriebsgeräten für Leuchtmittel gefordert, um einen ELV ("Extra-Low Voltage")-Bereich durch eine so genannte Potentialbarriere oder SELV-Barriere von Bereichen mit höherer Versorgungsspannung, insbesondere Netzspannung, zu trennen.

Zum Betreiben von Leuchtmitteln können Wandler eingesetzt werden, die als so genannte Resonanzwandler ausgestaltet sind, die einen Resonanzkreis aufweisen. Der Resonanzkreis kann ein Serien- oder Parallelresonanzkreis sein. Bei der Ausgestaltung von Wandlern besteht das Ziel, Verluste gering zu halten. Bei Wandlern, die für den Betrieb dimmbarer Leuchtmittel, insbesondere von Leuchtdioden (LEDs) wie anorganische LEDs oder organische LEDs (OLEDs), geeignet sein sollen, besteht zunehmend die Anforderung, eine Dimmbarkeit über einen weiten Bereich zu ermöglichen.

Resonanzwandler, die einen LLC-Resonanzkreis mit zwei Induktivitäten und einer Kapazität umfassen, können primärseitig resonant oder quasi-resonant gesteuert werden. Derartige Wandler haben den Vorteil, dass ein energieeffizienter Betrieb mit relativ geringen Schaltverlusten möglich ist.

Aus Sicherheitsgründen soll der Betrieb eines Wandlers erlauben, zumindest bestimmte Betriebszustände, beispielsweise Leerlauf oder Kurzschluss am Ausgang des SELV-Bereichs, zu erkennen. Darüber hinaus ist die Erfassung der Ausgangsspannung wünschenswert, um eine Last, die mit dem Ausgang des Wandlers verbunden ist, zu erkennen. Ein herkömmlicher Ansatz verwendet hierzu eine direkte Messung der Ausgangsspannung, die in der sekundärseitigen Schaltung durchgeführt wird. Die auf der Sekundärseite erfasste Spannung kann dann über einen Isolator zur Primärseite rückgeführt wird. Die Überbrückung der SELV-Barriere erfordert entsprechende Komponenten, die Bauraum und/oder Kosten des Betriebsgeräts erhöhen.

Die US 2012/0033453 A1 beschreibt ein Beispiel für einen resonanten Wandler, der eine Halbbrücke und einen LLC-Kreis umfasst und bei dem ein Isolator vorgesehen ist, um eine ausgangsseitig gemessene Größe an die Eingangsseite zurückzuführen. Die EP2252133 offenbart die Bereitstellung einer steuerbaren Schaltungsanordnung für ein Leuchtmittel.

Es besteht ein Bedarf an Vorrichtungen und Verfahren, die Verbesserungen im Hinblick auf die genannten Ziele bieten. Insbesondere besteht ein Bedarf an Vorrichtungen und Verfahren, bei denen der schaltungstechnische Aufwand und/oder die Kosten, die bei herkömmlichen Vorrichtungen zum Überbrücken der SELV-Barriere verbunden sind, reduziert oder vermieden werden können. Es besteht auch ein Bedarf an derartigen Vorrichtungen und Verfahren, die eine effiziente Energieübertragung und Dimmbarkeit über einen weiten Bereich erlauben.

Erfindungsgemäß werden ein Verfahren, ein Wandler und ein LED-Konverter mit den in den unabhängigen Ansprüchen angegebenen Merkmalen angegeben. Die abhängigen Ansprüche definieren Ausführungsformen.

Nach Ausführungsbeispielen der Erfindung wird ein LLC-Resonanzwandler, der eine primärseitige, getaktet betriebene Halbbrückenschaltung und einen LLC-Resonanzkreis umfasst, so betrieben, dass primärseitig eine Spannung erfasst wird, die mit der Ausgangsspannung einer sekundärseitigen Schaltung des LLC-Resonanzwandlers korreliert ist. Die erfasste Spannung kann eine Peakspannung über einer Primärspule eines Transformators sein, die nach dem Schalten der Schalter der Halbbrückenschaltung auftritt. Die erfasste Spannung kann eine Peakspannung über einem Kondensator des LLC-Resonanzkreises sein, die nach dem Schalten der Schalter der Halbbrückenschaltung auftritt. Der Wandler kann auch eine Versorgungsschaltung zur Versorgung einer elektronischen Steuereinrichtung, insbesondere einer integrierten Halbleiterschaltung, mit Energie aufweisen. Die Versorgungsschaltung kann eine Drahtwicklung und/oder Spule auf dem Transformator gekoppelt sein, der Energie zwischen der primärseitigen Schaltung und der sekundärseitigen Schaltung überträgt. Die primärseitig erfasste Spannung, die mit der Ausgangsspannung einer sekundärseitigen Schaltung des LLC-Resonanzwandlers korreliert, kann ein in der Versorgungsschaltung erfasster Peakwert einer Spannung sein, der nach dem Schalten der Schalter der Halbbrückenschaltung auftritt.

Nach Ausführungsbeispielen kann somit eine in der primärseitigen Schaltung des LLC-Resonanzwandlers erfasste Spannung verarbeitet werden, um Informationen über eine Ausgangsspannung und/oder Informationen über die Last zu erhalten. Eine Erfassung der Ausgangsspannung in der sekundärseitigen Schaltung und Rückführung über die SELV-Barriere ist nicht mehr unbedingt erforderlich. Es kann eine Regelung, beispielsweise der Ausgangsspannung, abhängig von der primärseitig erfassten Spannung erfolgen, ohne dass die Ausgangsspannung in der sekundärseitigen Schaltung erfasst werden muss.

Nach einem Ausführungsbeispiel wird ein Verfahren zum Betreiben eines LLC-Resonanzwandlers für ein Leuchtmittel angegeben. Der LLC-Resonanzwandler weist eine primärseitige Schaltung und eine davon galvanisch getrennte sekundärseitige Schaltung auf. Ein erster Schalter und ein zweiter Schalter werden in einer Halbbrückenschaltung, mit der ein LLC-Resonanzkreis der primärseitigen Schaltung verbunden ist, getaktet geschaltet. Eine Spannung wird in der primärseitigen Schaltung erfasst. Die in der primärseitigen Schaltung erfasste Spannung wird verarbeitet, um eine Ausgangsspannung der sekundärseitigen Schaltung zu detektieren.

Das Verfahren nutzt, dass bei dem LLC-Resonanzwandler primärseitig erfasste Spannungen Informationen über die Ausgangsspannung liefern können. Dies erlaubt, auch ohne Messung in der sekundärseitigen Schaltung Informationen über die Ausgangsspannung und somit über die Last zu erhalten. Eine offene Schaltung am Ausgang und/oder ein Kurzschluss am Ausgang der sekundärseitigen Schaltung kann detektiert werden.

Der Wandler kann als FCC-Gerät ("Fixed Constant Current") oder als FCV-Gerät ("Fixed Constant Voltage") ausgebildet sein. Der Wandler kann als ein Gerät mit galvanischer Trennung zwischen dem SELV-Bereich und dem Nicht-SELV-Bereich ausgestaltet sein.

Die primärseitig erfasste Spannung kann so verarbeitet werden, dass eine offene Schaltung am Ausgang der sekundärseitigen Schaltung und/oder ein Kurzschlusses am Ausgang der sekundärseitigen Schaltung abhängig von der in der primärseitigen Schaltung erfassten Spannung detektiert wird. Ein Fehlermanagement kann eingeleitet werden, wenn eine offene Schaltung und/oder ein Kurzschluss am Ausgang der sekundärseitigen Schaltung detektiert wird. Beispielsweise kann eine Sicherheitsabschaltung durchgeführt und/oder ein Signal, das das Vorliegen eines Kurzschlusses oder anderen Fehlerzustands anzeigt, ausgegeben werden. Ein Fehlerzustand kann erkannt werden, wenn die Peakspannung nicht in einem vorgegebenen Bereich zulässiger primärseitig erfasster Spannungen liegt.

Die primärseitig erfasste Spannung kann so verarbeitet werden, dass eine Last, die mit dem Ausgang der sekundärseitigen Schaltung verbunden ist, abhängig von der in der primärseitigen Schaltung erfassten Spannung erkannt wird. Die Information über die Last kann bei einer Regelung der Ausgangsspannung berücksichtigt werden. Dadurch kann eine Lastabhängigkeit der Ausgangsspannung kompensiert werden.

Das Detektieren der Last kann umfassen: Erkennen einer Anzahl von LEDs, die mit dem Ausgang der sekundärseitigen Schaltung verbunden sind. Die Anzahl von LEDs kann abhängig von der in der primärseitigen Schaltung erfassten Spannung erkannt werden.

Das getaktete Schalten der Schalter der Halbbrückenschaltung kann abhängig von der erkannten Last durchgeführt wird. Die Ausgangsspannung der sekundärseitigen Schaltung kann basierend auf der in der primärseitigen Schaltung erfassten Spannung geregelt werden. Falls eine Spannungsregelung abhängig von der primärseitig erfassten Spannung durchgeführt wird, kann die Frequenz, mit der die Schalter der Halbbrückenschaltung geschaltet werden, als Stellgröße des Regelkreises verwendet werden.

Das Verarbeiten der primärseitig erfassten Spannung kann das Ermitteln einer Peakspannung, die zeitlich koordiniert mit dem getakteten Schalten auftritt, umfassen. Es kann ein Maximum oder Minimum der primärseitig erfassten Spannung nach dem Schalten oder beim Schalten der Schalter der Halbbrückenschaltung ermittelt werden. Abhängig von dem Peakwert können Informationen über die Ausgangsspannung bzw. die Last am Ausgang abgeleitet werden.

Der LLC-Resonanzwandler kann eine Steuereinrichtung umfassen, die die in der primärseitigen Schaltung erfasste Spannung verarbeitet. Energie zum Betreiben der Steuereinrichtung kann von einem Transformator geliefert werden, der auch Energie zwischen der primärseitigen Schaltung und der sekundärseitigen Schaltung überträgt. Eine Versorgungsschaltung kann zwischen den Transformator und die Steuereinrichtung geschaltet sein. Die Versorgungsschaltung kann mit wenigstens einer Wicklung auf dem Transformatorkern des Transformators gekoppelt sein, um eine Versorgungsspannung für die Steuereinrichtung zu erzeugen, die kleiner als eine Versorgungsspannung der primärseitigen Schaltung ist. Die Steuereinrichtung kann als integrierte Halbleiterschaltung ausgestaltet sein. Die Spannung, die mit der Ausgangsspannung der LLC-Resonanzwandlers korreliert ist, kann in der Versorgungsschaltung auf der Primärseite des Wandlers erfasst werden. Die entsprechende Spannung kann so um einen Spannungs-Offset verschoben werden, dass die nach einem Schaltvorgang der Halbbrücke auftretende Peakspannung einem positiven Spannungswert entspricht. Dadurch kann die genaue Messung der Peakspannung erleichtert werden. Zur Erzeugung des Spannungs-Offsets kann eine Konstantstromquelle und ein Widerstand verwendet werden. Der Konstantstrom kann von einem Anschluss der Steuereinrichtung geliefert werden. Der Konstantstrom kann auch von einer externen Schaltung erzeugt werden, d.h. von einer von der Steuereinrichtung verschiedenen Konstantstromquelle geliefert werden.

Die in der primärseitigen Schaltung erfasste Spannung kann an einer Primärspule eines Transformators erfasst werden. Die in der primärseitigen Schaltung erfasste Spannung kann an einem Kondensator des LLC-Resonanzkreises erfasst werden.

Nach einem weiteren Ausführungsbeispiel wird ein Wandler für ein Leuchtmittel angegeben. Der Wandler umfasst eine primärseitige Schaltung mit einer Halbbrückenschaltung, die zwei wechselseitig getaktete Schalter aufweist, und mit einem LLC-Resonanzkreis, der mit einem Knoten zwischen den zwei Schaltern gekoppelt ist. Der Wandler umfasst eine sekundärseitige Schaltung mit einem Ausgang zur Energieversorgung des Leuchtmittels. Die primärseitige Schaltung ist eingerichtet, um eine in der primärseitigen Schaltung erfasste Spannung, die von einer Ausgangsspannung der sekundärseitigen Schaltung abhängt, an eine Steuereinrichtung bereitzustellen. Die primärseitige Schaltung kann einen entsprechenden Anschluss zum Abgreifen der Spannung, die mit der der sekundärseitigen Schaltung korreliert ist, aufweisen.

Der Wandler kann eine Steuereinrichtung umfassen, die mit der primärseitigen Schaltung gekoppelt und eingerichtet ist, um die in der primärseitigen Schaltung erfasste Spannung zu verarbeiten, um eine Ausgangsspannung der sekundärseitigen Schaltung zu detektieren.

Ausgestaltungen des Wandlers nach vorteilhaften oder bevorzugten Ausführungsbeispielen sowie die damit jeweils erzielten Wirkungen entsprechen den unter Bezugnahme auf das Verfahren beschriebenen Ausgestaltungen.

Nach einem weiteren Aspekt der Erfindung wird ein Wandler für ein Leuchtmittel angegeben, bei dem eine Steuereinrichtung, die insbesondere als integrierte Halbleiterschaltung ausgestaltet sein kann, von einem Transformator mit Energie versorgt wird, der die galvanisch entkoppelte Energieübertragung zwischen Eingangsseite und Ausgangsseite leistet. Der Wandler umfasst den Transformator zum Übertragen von Energie zwischen einer Eingangsseite und einer Ausgangsseite, eine Steuereinrichtung zum Steuern des Wandlers und eine Versorgungsschaltung, die eingerichtet ist, um zur Energieversorgung der Steuereinrichtung Energie von dem Transformator zu der Steuereinrichtung zu übertragen.

Der Transformator kann eine Primärspule, eine Sekundärspule und wenigstens eine Versorgungswicklung auf einem Transformatorkern aufweist. Die wenigstens eine Versorgungswicklung kann mit der Versorgungsschaltung verbunden sein.

Ein derartiger Wandler kann auch dann eingesetzt werden, wenn keine primärseitige Spannungserfassung erfolgt, um Informationen über eine Ausgangsspannung des Wandlers bzw. über die Last am Ausgang des Wandlers zu erhalten.

Im Vergleich zu herkömmlichen Ansätzen, bei denen die Versorgungsspannung für die Steuereinrichtung eines Wandlers für ein Leuchtmittel beispielsweise über einen Spannungsteiler aus der Versorgungsspannung der primärseitigen Schaltung erzeugt wird, erlaubt die Ausgestaltung des Wandlers nach diesem Aspekt der Erfindung eine Energieversorgung der Steuereinrichtung mit geringen Leistungsverlusten.

Die Eingangsseite des Wandlers kann einen LLC-Resonanzkreis und eine Halbbrücke mit zwei wechselseitig getakteten Schaltern aufweisen. Die Halbbrücke kann von der Steuereinrichtung gesteuert werden.

Nach einem weiteren Ausführungsbeispiel wird ein LED-Konverter bereitgestellt, der den Wandler nach einem Ausführungsbeispiel umfasst.

Nach einem weiteren Ausführungsbeispiel wird ein Beleuchtungssystem angegeben, das den LED-Konverter und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Dimmbefehle an den LED-Konverter zu übermitteln.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem Ausführungsbeispiel.
FIG. 2 zeigt ein Schaltbild eines Wandlers nach einem Ausführungsbeispiel.
FIG. 3 illustriert die primärseitige Erfassung einer Spannung, um Informationen über eine Ausgangsspannung am Ausgang des Wandlers zu erhalten.
FIG. 4 zeigt ein Schaltbild eines Wandlers nach einem weiteren Ausführungsbeispiel.
FIG. 5 ist ein Flussdiagramm eines Verfahrens nach einem Ausführungsbeispiel.
FIG. 6 zeigt ein Schaltbild eines Wandlers nach einem weiteren Ausführungsbeispiel.
FIG. 7 illustriert die primärseitige Erfassung einer Spannung in dem Wandler von FIG. 6, um Informationen über eine Ausgangsspannung am Ausgang des Wandlers zu erhalten.
FIG. 8 zeigt ein Schaltbild eines Wandlers nach einem weiteren Ausführungsbeispiel.
FIG. 9 illustriert die primärseitige Erfassung einer Spannung in dem Wandler von FIG. 8, um Informationen über eine Ausgangsspannung am Ausgang des Wandlers zu erhalten.
FIG. 10 zeigt ein Schaltbild eines Wandlers nach einem weiteren Ausführungsbeispiel.

Die Merkmale der verschiedenen nachfolgend beschriebenen Ausführungsbeispiele können miteinander kombiniert werden, sofern dies in der nachfolgenden Beschreibung nicht ausdrücklich ausgeschlossen ist.

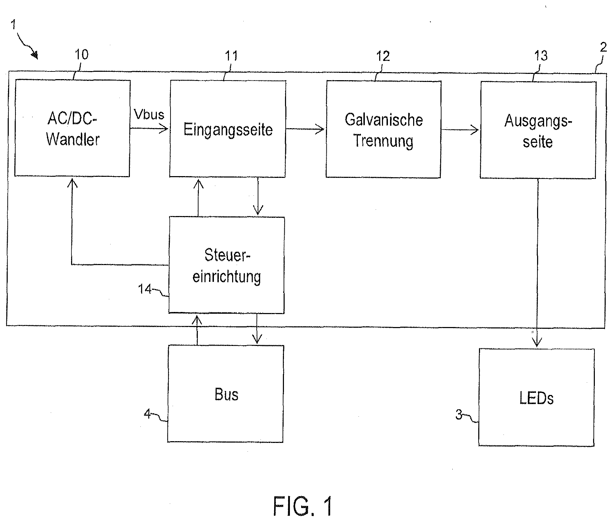

FIG. 1 zeigt ein Beleuchtungssystem 1, bei dem ein Betriebsgerät 2 nach einem Ausführungsbeispiel LEDs 3 mit Energie versorgt. Das Betriebsgerät 2 kann als LED-Konverter ausgestaltet sein. Der LED-Konverter 2 kann als FCC-Gerät oder FCV-Gerät ausgebildet sein. Der LED-Konverter 2 kann so ausgestaltet sein, dass die Helligkeit der LEDs 3 über Befehle, die beispielsweise über einen Bus 4 oder drahtlos übertragen werden, einstellbar ist. Der LED-Konverter 2 kann eine entsprechende Schnittstelle zur Kommunikation mit einem zentralen Steuergerät umfassen und eingerichtet sein, um über die Schnittstelle Dimmbefehle zu empfangen und um über die Schnittstelle Informationen über den Betriebszustand des LED-Konverters 2 und/oder der LEDs 3 auszugeben.

Der LED-Konverter 2 kann als SELV-Gerät ausgestaltet sein, bei der eine primärseitige Schaltung (beispielsweise eine nicht-SELV-Seite) und eine sekundärseitige Schaltung (beispielsweise eine SELV-Seite) galvanisch getrennt sind. Der LED-Konverter 2 kann einen AC/DC-Wandler 10 umfassen. Der AC/DC-Wandler 10 kann eingerichtet sein, um eingangsseitig mit einer Netzspannung gekoppelt zu werden. Der AC/DC-Wandler 10 kann als so genannte Glättungsschaltung oder Schaltung zur Leistungsfaktorkorrektur (PFC) ausgestaltet sein. Der AC/DC-Wandler 10 stellt eine Busspannung Vbus als Versorgungsspannung an einen Wandler bereit, der eine eingangs- bzw. primärseitige Schaltung 11 und eine davon galvanisch getrennte ausgangs- bzw. sekundärseitige Schaltung 13 aufweist. Eine galvanische Trennung wird durch einen Transformator 12 oder anderen Umsetzer erreicht. Der LED-Konverter 2 kann als FCC-Gerät oder FCV-Gerät ausgestaltet sein.

Der LED-Konverter 2 ist so ausgestaltet, dass eine Ausgangsspannung am Ausgang des LED-Konverters 2 basierend auf einer in der primärseitigen Schaltung 11 erfassten Spannung erkannt wird. Auf diese Weise können Fehlerzustände, beispielsweise eine offene Schaltung oder ein Kurzschluss am Ausgang, erkannt werden. Alternativ oder zusätzlich kann auch eine Last erkannt werden, die von dem LED-Konverter 2 mit Energie versorgt wird.

Zur Erkennung der Ausgangsspannung abhängig von der in der primärseitigen Schaltung erfassten Spannung ist die Steuereinrichtung 14 entsprechend mit der primärseitigen Schaltung 11 gekoppelt, um den zeitabhängigen Spannungsverlauf oder einen Peakwert der Spannung zu empfangen, die in der primärseitigen Schaltung erfasst wird. Die Steuereinrichtung 14 kann basierend auf dem Peakwert der Spannung, der nach einem Schaltvorgang von Schaltern in einer Halbbrückenschaltung der primärseitigen Schaltung 11 auftritt, Informationen über die Ausgangsspannung erhalten. Die Steuereinrichtung 14 kann so automatisch eine Fehlererkennung durchführen, um einen offenen Ausgang und/oder einen Kurzschluss zu erkennen. Die Steuereinrichtung 14 kann eine entsprechende Sicherheitsabschaltung einleiten, wenn die Peakspannung, die primärseitig nach einem Schaltvorgang von Schaltern in einer Halbbrückenschaltung auftritt, nicht in einem Intervall akzeptabler Spannungswerte für den Dauerbetrieb des LED-Konverters 2 liegt. Die Steuereinrichtung 14 kann alternativ oder zusätzlich andere Funktionen ausführen, beispielsweise eine Spannungsregelung der Ausgangsspannung abhängig von der in der primärseitigen Schaltung erfassten Spannung. Die Steuereinrichtung 14 kann auch herkömmliche Funktionen der Steuerung eines LED-Konverters, wie die Umsetzung von Dimmbefehlen ausführen.

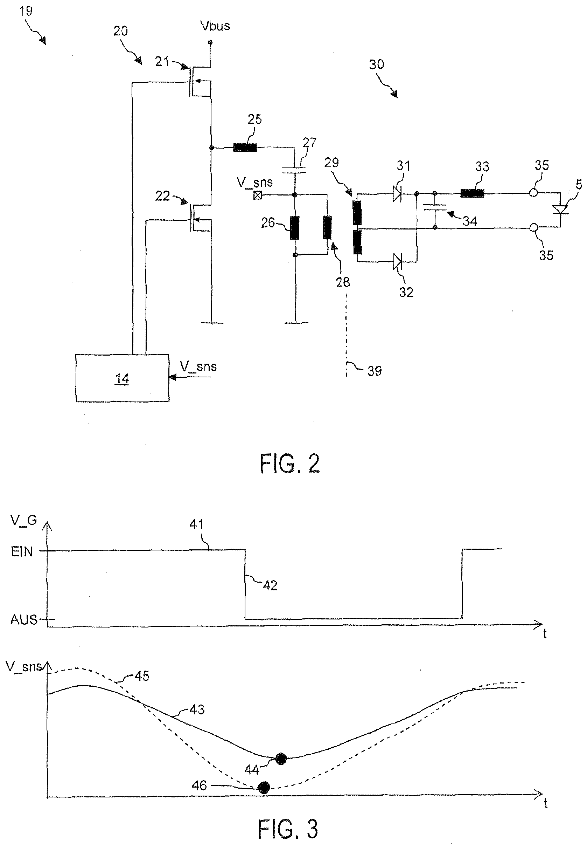

Die entsprechende Spannung in der primärseitigen Schaltung, die in direkter Beziehung zur Ausgangsspannung der sekundärseitigen Schaltung steht und aus der Informationen über die Ausgangsspannung des Wandlers ableitbar sind, kann an unterschiedlichen Stellen in der primärseitigen Schaltung abgegriffen werden, wie unter Bezugnahme auf FIG. 2-9 näher beschrieben wird.

Wie in FIG. 1 schematisch dargestellt ist, kann bei dem LED-Konverter 2 die Ausgangsspannung erkannt werden, ohne dass dafür eine Messung auf der SELV-Seite durchgeführt werden muss und/oder ohne dass ein entsprechendes Messergebnis über die SELV-Barriere zurückgeführt werden muss. Die Steuereinrichtung 14 ist so eingerichtet, dass sie abhängig von einer primärseitig gemessenen Spannung Informationen über die Ausgangsspannung des LED-Konverters 2 ableitet.

FIG. 2 ist ein Schaltbild eines Wandlers 19 nach einem Ausführungsbeispiel. Der Wandler 19 umfasst eine primärseitige Schaltung 20 und eine sekundärseitige Schaltung 30. Es liegt Potentialtrennung zwischen der primärseitigen Schaltung 20 und der sekundärseitigen Schaltung 30 vor. Zur Trennung kann ein Transformator mit einer Primärspule 28 und einer Sekundärspule 29 vorgesehen sein. Der Transformator weist eine Hauptinduktivität auf, die auch als eine der Induktivitäten eines LLC-Resonanzkreises wirken kann. Diese ist in der FIG. 2 symbolisch als zweite Induktivität 26 dargestellt. Der Wandler 19 kann bei dem LED-Konverter 2 oder bei einem anderen Betriebsgerät zum Betreiben von LEDs verwendet werden, um die Funktionen der in FIG. 1 dargestellten primärseitigen Schaltung 11, der galvanischen Trennung 12 und der sekundärseitigen Schaltung 13 zu erfüllen. Der Wandler 19 wirkt als DC/DC-Wandler. Die sekundärseitige Schaltung 30 kann ein SELV-Bereich sein, der durch eine SELV-Barriere 39 vom primärseitigen Bereich getrennt ist. Die primärseitige Schaltung 20 kann alle Komponenten beinhalten, die nicht zum SELV-Bereich gehören.

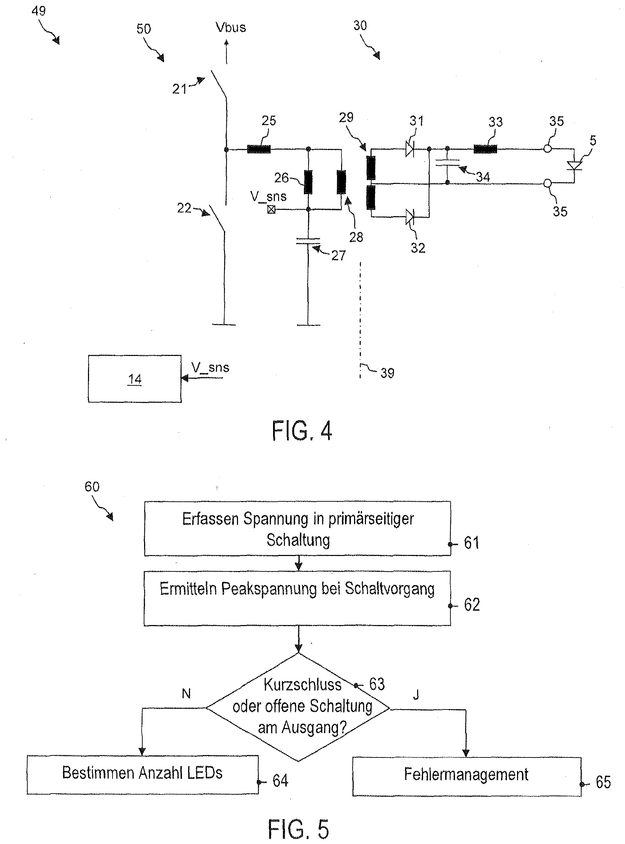

Die primärseitige Schaltung 20 umfasst einen LLC-Resonanzkreis, der als Serienresonanzkreis ausgestaltet ist. Der LLC-Resonanzkreis weist eine erste Induktivität 25, eine Kapazität 27 und eine zweite Induktivität 26 in einer Serienschaltung auf. Gemäß der allgemeinen Terminologie in diesem technischen Gebiet wird hier der Begriff "LLC-Resonanzkreis" bzw. "LLC-Resonanzwandler" so verwendet, dass damit ein Resonanzkreis mit zwei Induktivitäten und einer Kapazität bzw. ein entsprechender Wandler bezeichnet wird, wobei es nicht darauf ankommt, ob wie in FIG. 2 der Kondensator 27 zwischen die Induktivitäten 25 und 26 geschaltet ist oder ob wie in FIG. 4 die Induktivität 26 zwischen die Induktivität 25 und den Kondensator 27 geschaltet ist. Das zweite induktive Element 26 repräsentiert wie gesagt die Hauptinduktivität der Primärspule 28 des Transformators. Das zweite induktive Element 26 kann die HauptInduktivität des Resonanzkreises sein, deren Induktivität größer als die erste Induktivität 25 ist. Auch die erste Induktivität 25 kann in den Transformator integriert sein und beispielsweise eine Streuinduktivität sein. Alternativ kann auch eine zusätzliche Induktivität zusätzlich zu der Primärspule 28 des Transformators angeordnet werden und auch als eine der zwei Induktivitäten des LLC-Resonanzkreises wirken. Andere Ausgestaltungen des LLC-Resonanzkreises sind ebenfalls möglich. Beispielsweise muss die Kapazität 27 nicht zwischen die erste Induktivität 25 und die zweiten Induktivität 26 geschaltet sein.

Die primärseitige Schaltung 20 umfasst eine Halbbrückenschaltung mit einem ersten Schalter 21, der ein Leistungsschalter sein kann, und einem zweiten Schalter 22, der ein Leistungsschalter sein kann. Der erste Schalter 21 und der zweite Schalter 22 können identisch sein, und die Halbbrückenschaltung kann als symmetrische Halbbrückenschaltung ausgebildet sein. Der Resonanzkreis ist mit einem Knoten zwischen dem ersten Schalter 21 und dem zweiten Schalter 22 verbunden. Der Resonanzkreis ist mit der Mitte der Halbbrückenschaltung zwischen den zwei Schaltern 21 und 22 verbunden. Ein erster Anschluss der ersten Induktivität 25 des Resonanzkreises kann mit dem Knoten zwischen dem ersten Schalter 21 und dem zweiten Schalter 22 der Halbbrückenschaltung verbunden sein. Ein zweiter Anschluss der ersten Induktivität 25 kann mit einem ersten Anschluss der Kapazität 27 verbunden sein. Ein zweiter Anschluss der Kapazität 27 kann mit einem ersten Anschluss der zweiten Induktivität 26 des Resonanzkreises verbunden sein.

Im Betrieb des Wandlers 19 steuert die Steuereinrichtung 14 den ersten Schalter 21 und den zweiten Schalter 22. Dabei kann jeder der Schalter jeweils mit derselben vorgegebenen Frequenz ein- und ausgeschaltet werden. Die Steuereinrichtung 14 steuert den ersten Schalter 21 und den zweiten Schalter 22 so, dass immer nur einer der beiden Schalter leitend geschaltet ist. Der erste Schalter 21 und der zweite Schalter 22 werden von der Steuereinrichtung 14 wechselseitig getaktet betrieben. Die Totzeit zwischen dem Ausschalten eines Schalters und dem Einschalten des jeweils anderen Schalters kann klein sein, insbesondere viel kleiner als das Inverse der Schaltfrequenz.

Die primärseitige Schaltung 20 ist so ausgestaltet, dass eine über der Primärspule 28 abfallende Spannung erfasst werden kann. Die primärseitige Schaltung 20 kann einen entsprechenden Leiter bzw. Anschluss aufweisen, mit dem diese Spannung an die Steuereinrichtung 14 bereitgestellt werden kann.

Eie sekundärseitige Schaltung 30 weist einen der Sekundärspule 29 nachgeschalteten Gleichrichter auf, der beispielsweise durch eine erste Diode 31 und eine zweite Diode 32 gebildet sein kann. Eine Mitte der Sekundärspule 29 kann mit einem Ausgang der sekundärseitigen Schaltung gekoppelt sein. Enden der Sekundärspule 29 können über die Dioden 31 und 32 mit dem Ausgang 35 gekoppelt sein. Optional kann ein induktives Element 33, beispielsweise eine Spule, vorgesehen sein, durch das dem Ausgang 35 Strom zugeführt wird. Das induktive Element 33 kann insbesondere vorgesehen sein, wenn der Wandler 19 als FCC-Gerät betrieben werden soll. Ein Kondensator 34 kann zwischen die Ausgänge des Gleichrichters geschaltet sein.

Eine mit dem Ausgang 35 der sekundärseitigen Schaltung 30 bzw. des Wandlers verbundene Last 5 kann ein LED, eine LED-Strecke mehrere LEDs oder mehrere LED-Strecken umfassen. Die LEDs können in ein LED-Modul integriert sein.

Informationen über die Ausgangsspannung am Ausgang 35 des Wandlers werden basierend auf der in der primärseitigen Schaltung erfassten Spannung V_sns abgeleitet. Die entsprechende Spannung kann beispielsweise die über der Primärspule 28 abfallende Spannung sein. Die in der primärseitigen Schaltung erfasste Spannung V_sns wird der Steuereinrichtung 14 zugeführt. Die in der primärseitigen Schaltung erfasste Spannung V_sns kann A/D-gewandelt werden, bevor sie der Steuereinrichtung 14 zugeführt wird.

Wenn die Schalter in der Halbbrückenschaltung geschaltet werden, klemmen die Gleichrichterdioden 31, 32 auf der Sekundärseite die Spannung an der Sekundärspule auf die Ausgangsspannung, die an der Last 5 anliegt. Entsprechend können aus der Spannung, die beim Schalten der Schalter in der Halbbrückenschaltung an der Primärspule auftritt, Informationen über die Ausgangsspannung am Ausgang 35 abgeleitet werden. Dieses Prinzip wird nach Ausführungsbeispielen verwendet, um eine Ausgangsspannung, die im SELV-Bereich 30 auftritt, durch Messung einer Spannung im nicht-SELV-Bereich 20 zu detektieren. Eine unmittelbare Messung der Ausgangsspannung im SELV-Bereich 30 und Rückführung der gemessenen Spannung über die SELV-Barriere 39 ist nicht erforderlich.

FIG. 3 zeigt schematisch die von der Steuereinrichtung 14 an einen der Schalter 21 oder 22 angelegte Gatespannung 41, mit der der entsprechende Schalter geschaltet wird. Der andere Schalter wird jeweils entgegengesetzt geschaltet. Die Frequenz, mit der die Schalter geschaltet werden, kann beispielsweise zur Regelung der Ausgangsleistung und/oder Ausgangsspannung des Wandlers angepasst werden.

FIG. 3 zeigt auch die Spannung V_sns, wie sie beispielsweise an der Primärspule 28 in der primärseitigen Schaltung 20 erfasst wird. Ein Spannungsverlauf 43 weist eine (positive oder negative) Peakspannung 44 auf, die zeitlich korreliert mit einem Schaltvorgang 42 der Schalter der Halbbrückenschaltung auftritt. Der Peakspannung 44 kann in die Ausgangsspannung umgerechnet werden, um die Ausgangsspannung zu detektieren. Alternativ oder zusätzlich kann die Peakspannung 44 von der Steuereinrichtung 14 automatisch mit vorgegebenen Spannungswerten verglichen werden, um einen offenen Schaltkreis am Ausgang 35, einen Kurzschluss am Ausgang 35 oder die mit dem Ausgang 35 verbundene Last 5 zu erkennen.

Bei einer Änderung der Ausgangsspannung ändert sich auch der Verlauf der Spannung V_sns, die beispielsweise an der Primärspule 28 in der primärseitigen Schaltung 20 erfasst wird. Ein Spannungsverlauf 45, der bei einer andere Last resultieren würde, weist eine (positiven oder negativen) Peakspannung 46 auf, die zeitlich korreliert mit dem Schaltvorgang 42 der Schalter der Halbbrückenschaltung auftritt. Die Peakspannung 46 kann in die Ausgangsspannung umgerechnet werden, um die Ausgangsspannung zu detektieren. Alternativ oder zusätzlich kann die Peakspannung 46 der Steuereinrichtung 14 automatisch mit vorgegebenen Spannungswerten verglichen werden, um einen offenen Zustand am Ausgang 35, einen Kurzschluss am Ausgang 35 oder die mit dem Ausgang 35 verbundene Last 5 zu erkennen. Zur Lasterkennung kann dabei genutzt werden, dass beispielsweise selbst bei einem FCV-Gerät die Ausgangsspannung im realen System immer in einem gewissen Grad mit der Anzahl von LEDs bzw. der Last variiert. Aus der Ausgangsspannung kann somit auf die Anzahl von LEDs bzw. Last rückgeschlossen werden.

Die Steuereinrichtung 14 kann so eingerichtet sein, dass sie die beim Schalten der Schalter der Halbbrückenschaltung auftretende Peakspannung detektiert. Die Steuereinrichtung 14 kann die Peakspannung geeignet weiterverarbeiten, beispielsweise unter Verwendung hinterlegter Formeln, die die Peakspannung V_sns an der Primärspule in die Ausgangsspannung am Ausgang 35 umrechnen, durch Schwellenwertvergleiche zur Erkennung von Fehlerzuständen und/oder durch Verwendung von Kennfeldern, die primärseitig gemessene Spannungswerte in Werte der Ausgangsspannung und/oder Werte der Last übersetzen. Für diese Funktionen kann die Steuereinrichtung 14 entsprechende Logikkomponenten und/oder Speicher umfassen. Die Steuereinrichtung 14 kann als integrierte Halbleiterschaltung ausgestaltet sein, die eine anwendungsspezifische Spezialschaltung sein kann. Die Steuereinrichtung 14 kann insbesondere als ASIC ("Application Specific Integrated Circuit") ausgestaltet sein. Die Steuereinrichtung 14 kann auch als programmierbare Schaltung ausgestaltet sein, die durch Firmware oder Software so programmiert ist, dass sie die primärseitig erfasste Spannung weiter verarbeitet, um daraus Informationen über die Ausgangsspannung zu erhalten.

Verschiedene andere Ausgestaltungen von Wandlern sind möglich, bei denen andere Spannungen in der primärseitigen Schaltung erfasst und/oder ausgewertet werden können, um die Ausgangsspannung zu detektieren.

FIG. 4 ist ein Schaltbild eines Wandlers 49 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-3 beschrieben wurden, sind mit denselben Bezugszeichen bezeichnet.

Der Wandler 49 weist eine primärseitige Schaltung 50 mit einer getaktet betriebenen Halbbrückenschaltung und einem LLC-Resonanzkreis auf. Der LLC-Resonanzkreis ist als Serienresonanzkreis ausgestaltet, bei dem die Induktivität 26 zwischen die Induktivität 25 und die Kapazität 27 des LLC-Resonanzkreises geschaltet ist.

Bei dem Wandler 49 kann die Spannung V_sns erfasst werden, die über dem Kondensator 27 des LLC-Resonanzkreises in der primärseitigen Schaltung abfällt. Der Peakwert dieser Spannung entspricht dem Peakwert der Spannung, die über der Primärspule 28 abfällt, aber mit umgekehrten Vorzeichen, beziehungsweise dem gleichen Wert und Vorzeichen, wobei dieser mit einer Phasenverschiebung von einer halben Periode erreicht wird. Entsprechend kann aus der Peakspannung am Kondensator 27, die beim Schalten der Schalter der Halbbrückenschaltung auftritt, auf die Ausgangsspannung rückgeschlossen werden.

FIG. 5 ist ein Flussdiagramm eines Verfahrens 60, das von der Steuereinrichtung 14 zum Steuern eines Wandlers durchgeführt werden kann. Der Wandler kann als Wandler nach einem Ausführungsbeispiel ausgestaltet sein. Der Wandler weist einen LLC-Resonanzkreis mit Halbbrückenansteuerung auf. Der Wandler weist eine primärseitige Schaltung und eine davon galvanisch getrennte sekundärseitige Schaltung auf. Die primärseitige Schaltung kann beispielsweise ein nicht-SELV-Bereich des Wandlers sein und die sekundärseitige Schaltung kann der SELV-Bereich des Wandlers sein.

Bei 61 wird eine Spannung in der primärseitigen Schaltung erfasst. Die Spannung kann eine Spannung an einer Primärspule eines Transformators, an einer Induktivität des LLC-Resonanzkreises oder an einer Kapazität des LLC-Resonanzkreises sein.

Bei 62 wird die Peakspannung ermittelt, die beim Schalten von Schaltern der Halbbrücke auftritt. Es kann ein Maximum oder Minimum der erfassten Spannung ermittelt werden, das zeitlich korreliert mit dem Schalten von Schaltern der Halbbrücke auftritt.

Bei 63 wird de Spannung weiter verarbeitet, um Informationen über die Ausgangsspannung der sekundärseitigen Schaltung des Wandlers zu erhalten. Dazu kann beispielsweise überprüft werden, ob am Ausgang der sekundärseitigen Schaltung eine offene Schaltung oder ein Kurzschluss vorliegt. Dazu kann überprüft werden, ob die primärseitig erfasste Peakspannung in einem Intervall zulässiger Spannungswerte liegt. Falls weder eine offene Schaltung noch ein Kurzschluss am Ausgang der sekundärseitigen Schaltung vorliegt, kann bei 64 eine Last bestimmt werden, die mit dem Ausgang gekoppelt ist. Dazu kann beispielsweise die Anzahl von LEDs abgeschätzt werden, die mit dem Wandler gekoppelt ist und von diesem mit Energie versorgt wird. Die Informationen über die Last kann beispielsweise bei einer Spannungsregelung verwendet werden. Falls bei 63 erkannt wird, dass ein Kurzschluss am Ausgang der sekundärseitigen Schaltung vorliegt, kann bei 65 ein Fehlermanagement eingeleitet werden. Das Fehlermanagement kann die Ausgabe eines entsprechenden optischen, akustischen oder elektronischen Signals, das den Fehler anzeigt, und/oder eine Sicherheitsabschaltung umfassen.

Weitere Verfahrensschritte können vorgesehen sein. Beispielsweise kann das Ermitteln der Peakspannung, die beim Schalten von Schaltern der Halbbrücke auftritt, zyklisch wiederholt werden. Die Ausgangsspannung kann geregelt werden, wobei die primärseitig erfasste Peakspannung als Eingangssignal für die Regelung verwendet wird. Zur Regelung kann die Frequenz, mit der die Schalter der Halbbrücke geschaltet werden, als Stellgröße des Regelkreises geändert werden.

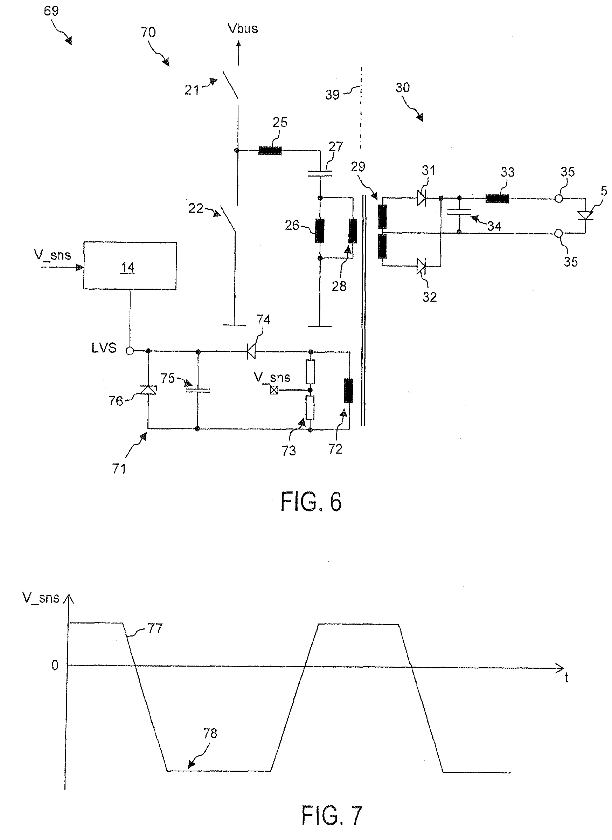

Die Erfassung der Spannung im nicht-SELV-Bereich des Wandlers, die mit der Ausgangsspannung des SELV-Bereichs korreliert ist, kann an weiteren Schaltungselementen durchgeführt werden. Beispielsweise kann, wie unter Bezugnahme auf FIG. 6-9 beschrieben wird, die Spannung, die Informationen über die Ausgangsspannung des Wandlers liefert, in einer Versorgungsschaltung abgegriffen werden, die eine Versorgungsspannung für die Steuereinrichtung 14 liefert.

FIG. 6 ist ein Schaltbild eines Wandlers 69 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-5 beschrieben wurden, sind mit denselben Bezugszeichen bezeichnet.

Der Wandler 69 weist eine primärseitige Schaltung 70 mit einer getaktet betriebenen Halbbrückenschaltung und einem LLC-Resonanzkreis auf. Weiterhin ist eine Versorgungsschaltung 71 vorgesehen, um die Versorgungsspannung für die Steuereinrichtung 14 bereitzustellen. Die Versorgungsschaltung 71 ist zwischen den Transformator mit der Primärspule 28 und der Sekundärspule 29 und einen Versorgungsanschluss der Steuereinrichtung 14 geschaltet. Die in der Versorgungsschaltung 71 auftretenden Spannungen können kleiner als die Versorgungsspannung Vbus der primärseitigen Schaltung, insbesondere viel kleiner als die Versorgungsspannung Vbus der primärseitigen Schaltung sein. Die Versorgungsschaltung 71 ist im nicht-SELV-Bereich des Wandlers vorgesehen, d.h. von der sekundärseitigen Schaltung 30 durch die SELV-Barriere getrennt sein.

Die Versorgungsschaltung 71 weist wenigstens eine Versorgungswicklung 72 oder eine Versorgungsspule 72 mit mehreren Wicklungen auf, die auf demselben Transformatorkern sitzt, auf dem auch die Primärspule 28 und die Sekundärspule 29 sitzen. Die wenigstens eine Versorgungswicklung 72 oder Versorgungsspule 72 kann so ausgestaltet sein, dass die von der Versorgungsschaltung 71 bereitgestellte Versorgungsspannung für die Steuereinrichtung 14 im Niederspannungsbereich liegt, beispielsweise bei ungefähr 5 Volt. Über eine Diode 74 wird ein Ladekondensator 75 geladen. Eine Zenerdiode 76 kann vorgesehen sein, um die von der Versorgungsschaltung 71 bereitgestellte Spannung zu stabilisieren bzw. zu begrenzen.

Da die wenigstens eine Versorgungswicklung 72 oder Versorgungsspule 72 auf demselben Transformatorkern sitzt wie die Sekundärspule 29, kann abhängig von einer Spannung an der wenigstens einen Versorgungswicklung 72 oder Versorgungsspule 72, die beim Schalten der Schalter der Halbbrücke auftritt, auf die Ausgangsspannung am Ausgang 35 der sekundärseitigen Schaltung 30 rückgeschlossen werden. Die Spannung V_sns, die im nicht-SELV-Bereich erfasst wird, kann über einen Spannungsteiler 73 an der wenigstens einen Versorgungswicklung 72 oder Versorgungsspule 72 abgegriffen werden. Diese Spannung V_sns kann der Steuereinrichtung 14 zugeführt werden. Die Spannung V_sns kann A/D-gewandelt werden, bevor sie der Steuereinrichtung 14 zugeführt wird. Die Steuereinrichtung 14 kann die Spannung V_sns verarbeiten, um abhängig von einer Peakspannung, die beim Schalten von Schaltern der Halbbrücke auftritt, Informationen über die Ausgangsspannung der sekundärseitigen Schaltung 30 abzuleiten.

FIG. 7 zeigt schematisch einen typischen zeitlichen Verlauf 77 der primärseitig erfassten Spannung V_sns, wie sie bei dem Wandler 69 von FIG. 6 abgegriffen wird. Eine negative Peakspannung 78, die beim Schalten von Schaltern der Halbbrücke auftritt, ist mit der Ausgangsspannung der sekundärseitigen Schaltung 30 korreliert. Die Peakspannung 78 kann von der Steuereinrichtung 14 rechnerisch weiter verarbeitet werden.

Da eine genaue Messung der Peakspannung 78, die einer negativen Spannung entsprechen kann, schwierig sein kann, kann die gemessene Spannung um einen Spannungs-Offset verschoben werden. Dazu kann in der Versorgungsschaltung ein Konstantstrom und ein zusätzlicher Widerstand verwendet werden.

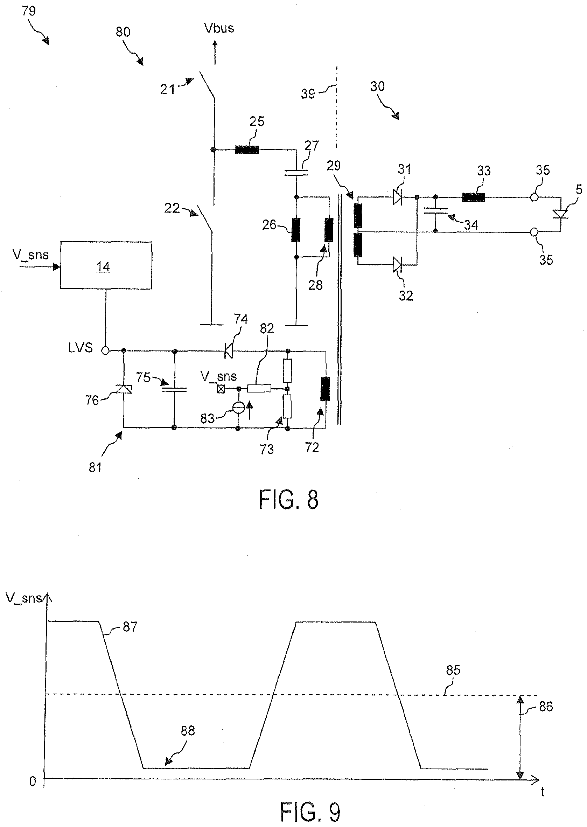

FIG. 8 ist ein Schaltbild eines Wandlers 79 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-7 beschrieben wurden, sind mit denselben Bezugszeichen bezeichnet.

Der Wandler 79 weist eine primärseitige Schaltung 80 mit einer getaktet betriebenen Halbbrückenschaltung und einem LLC-Resonanzkreis auf. Weiterhin ist eine Versorgungsschaltung 81 vorgesehen, um die Versorgungsspannung für die Steuereinrichtung 14 bereitzustellen. Die Versorgungsschaltung 81 ist grundsätzlich wie unter Bezugnahme auf FIG. 6 beschrieben ausgestaltet.

Um die abgetastete Spannung V_sns um einen Spannungs-Offset zu verschieben, weist die Versorgungsschaltung 81 einen weiteren Widerstand 82, der mit dem Spannungsteiler 73 verbunden ist, und einen Konstantstrom auf. Eine entsprechende Konstantstromquelle 83 ist schematisch dargestellt. Bei Ausführungsbeispielen muss keine separate Konstantstromquelle vorgesehen sein, sondern ein Anschlussstift der Steuereinrichtung 14 kann den Konstantstrom liefern. Somit kann die Steuereinrichtung 14 auch die Funktion der Konstantstromquelle 83 erfüllen.

Durch die Konstantstromquelle 83 und den Widerstand 82 wird die auf der nicht-SELV-Seite des Wandlers 79 abgetastete Spannung V_sns um ein Spannungs-Offset in den positiven Bereich verschoben. Der Spannungs-Offset kann so groß gewählt sein, dass die beim Schaltvorgang der Schalter in der Halbbrücke auftretende Spannung in den positiven Spannungsbereich verschoben wird. Dies kann durch entsprechende Wahl des von der Konstantstromquelle 83 gelieferten Stroms und des Widerstands 82 erreicht werden.

FIG. 9 zeigt schematisch einen typischen zeitlichen Verlauf 87 der Spannung V_sns, wie sie bei dem Wandler 79 von FIG. 8 abgegriffen wird. Durch die Konstantstromquelle 83 und den Widerstand 82 wird die Basislinie 85 um ein Spannungs-Offset 86 verschoben. Eine negative Peakspannung, die beim Schalten von Schaltern der Halbbrücke auftritt, wird durch den Spannungs-Offset zu positiven Spannungen verschoben. Durch Messung der Spannung 88, die beim Schalten der Schalter der Halbbrücke detektiert wird, und basierend auf dem bekannten Spannungs-Offset 86 kann die Steuereinrichtung 14 die negative Peakspannung an der Versorgungsspule 72 ermitteln, die beim Schalten der Schalter der Halbbrücke detektiert wird. Diese steht, wie erläutert, in einer direkten Beziehung zur Ausgangsspannung am Ausgang 35 der sekundärseitigen Schaltung 30.

Unter Bezugnahem auf FIG. 6-9 wurden Wandler beschrieben, bei denen eine Niederspannungsversorgung der Steuereinrichtung 14 durch die Versorgungsschaltung 71 bzw. 81 mit einer Spannungserfassung im nicht-SELV-Bereich kombiniert wird, um Informationen über die Ausgangsspannung am Ausgang der sekundärseitigen Schaltung 30 zu gewinnen. Eine derartige Versorgungsschaltung für die Steuereinrichtung 14 kann jedoch auch verwendet werden, wenn die Ausgangsspannung nicht primärseitig erfasst werden soll. Eine derartige Versorgungsschaltung, bei der die Versorgungsspannung für die Steuereinrichtung 14 über die Versorgungswicklung(en) 72 bzw. Versorgungsspule 72 auf dem Transformatorkern erzeugt wird, kann im Vergleich zu herkömmlichen Ansätzen Vorteile im Hinblick auf die Leistungsverluste bieten.

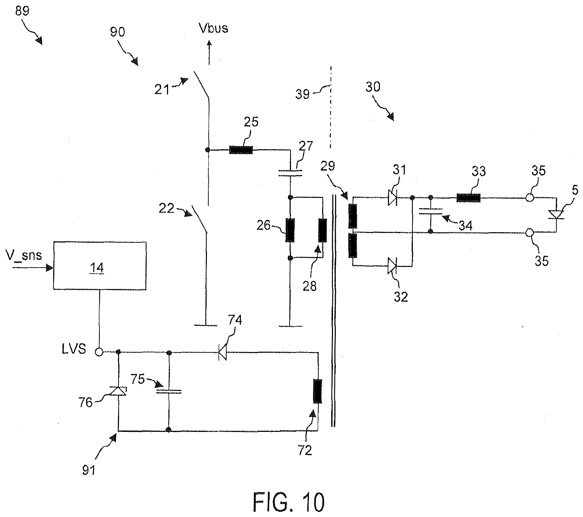

FIG. 10 zeigt einen Wandler 89 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-9 beschrieben wurden, sind mit denselben Bezugszeichen bezeichnet.

Der Wandler 89 weist eine primärseitige Schaltung 90 mit einer getaktet betriebenen Halbbrückenschaltung und einem LLC-Resonanzkreis auf. Es ist eine Versorgungsschaltung 91 vorgesehen, um die Versorgungsspannung für die Steuereinrichtung 14 bereitzustellen. Die Versorgungsschaltung 91 ist zwischen den Transformator mit der Primärspule 28 und der Sekundärspule 29 und einen Versorgungsanschluss der Steuereinrichtung 14 geschaltet. Die Ausgangsspannung der Versorgungsschaltung 91 kann kleiner, insbesondere viel kleiner, als die Versorgungsspannung Vbus der primärseitigen Schaltung sein. Die Versorgungsschaltung 91 kann im nicht-SELV-Bereich des Wandlers vorgesehen sein, d.h. von der sekundärseitigen Schaltung 30 durch die SELV-Barriere getrennt sein. Die Versorgungsschaltung 91 weist wenigstens eine Versorgungswicklung 72 oder eine Versorgungsspule 72 mit mehreren Wicklungen auf, die auf demselben Transformatorkern sitzt, auf dem auch die Primärspule 28 und die Sekundärspule 29 sitzen. Die wenigstens eine Versorgungswicklung 72 oder Versorgungsspule 72 kann so ausgestaltet sein, dass die von der Versorgungsschaltung 91 bereitgestellte Versorgungsspannung für die Steuereinrichtung 14 im Niederspannungsbereich liegt, beispielsweise bei ungefähr 5 Volt. Über eine Diode 74 wird ein Ladekondensator 75 geladen. Eine Zenerdiode 76 kann vorgesehen sein, um die von der Versorgungsschaltung 91 bereitgestellte Spannung zu stabilisieren bzw. zu begrenzen.

Bei dem Wandler 89 von FIG. 10 kann primärseitig eine Spannung abgetastet werden, die von der Ausgangsspannung der sekundärseitigen Schaltung 35 abhängt, ohne dass dies zwingend erforderlich ist. Bei weiteren Ausführungsbeispielen kann der Wandler 89, der die zwischen Transformator und Versorgungsanschluss der Steuereinrichtung 14 geschaltete Versorgungsschaltung 91 aufweist, auch andere Resonanzkreise als den LLC-Serienresonanzkreis umfassen, oder es muss gar kein Resonanzkreis vorgesehen sein. Eine Versorgungsschaltung 91, wie sie in FIG. 10 dargestellt ist, kann grundsätzlich bei Wandlern für Leuchtmittel verwendet werden, bei denen ein Transformator für eine galvanische Trennung von primärer und sekundärer Seite realisiert.

Während Ausführungsbeispiele unter Bezugnahme auf die Figuren beschrieben wurden, können Abwandlungen bei weiteren Ausführungsbeispielen realisiert werden. Während die Peakspannung, die beim Schalten der Schalter der Halbbrücke an einer Primärspule des Transformators auftritt, als Indikator für die Ausgangsspannung der sekundärseitigen Schaltung verwendet werden kann, kann eine entsprechende primärseitige Erfassung einer Spannung, die Indikator für die Ausgangsspannung der sekundärseitigen Schaltung verwendet werden kann, auch an anderen Elementen der primärseitigen Schaltung durchgeführt werden.

Induktivitäten und Kapazitäten können jeweils durch entsprechende induktive bzw. kapazitive Elemente, beispielsweise als Spulen bzw. Kondensatoren, gebildet werden. Es ist jedoch auch möglich, dass kleinere Induktivitäten, beispielsweise die kleinere Induktivität des LLC-Resonanzkreises, als Streuinduktivität ausgebildet sind. Ähnlich können kleinere Kapazitäten als Streukapazitäten ausgebildet sein.

Während eine der Spulen des LLC-Resonanzkreises in einer Parallelschaltung mit einer Primärspule des Transformators vorgesehen sein kann, kann bei weiteren Ausführungsbeispielen die Primärspule des Transformators auch als eine der Induktivitäten des LLC-Resonanzkreises wirken.

Wandler und Verfahren nach Ausführungsbeispielen können insbesondere zur Energieversorgung von LEDs eingesetzt werden.

## Patentansprüche

1. Verfahren zum Betreiben eines LLC-Resonanzwandlers (19; 49; 69; 79) für ein Leuchtmittel (3; 5), wobei der LLC-Resonanzwandler (19; 49; 69; 79) eine primärseitige Schaltung (20; 50; 70; 80) und eine davon durch eine SELV-Barriere (39) galvanisch getrennte sekundärseitige Schaltung (30) aufweist, umfassend:
getaktetes Schalten eines ersten Schalters (21) und eines zweiten Schalters (22) einer Halbbrückenschaltung, mit der ein LLC-Resonanzkreis (25-27) der primärseitigen Schaltung (20; 50; 70; 80) verbunden ist;
Erfassen einer Spannung (V_sns; 43-46; 77, 78; 87, 88) in der primärseitige Schaltung (20; 50; 70; 80); und
Ermitteln einer Ausgangsspannung der sekundärseitigen Schaltung (30) basierend auf der erfassten Spannung (V_sns; 43-46; 77, 78; 87, 88), wobei die Ausgangsspannung der sekundärseitigen Schaltung (30) mit der in der primärseitigen Schaltung (20; 50; 70; 80) erfassten Spannung (V_sns; 43-46; 77, 78; 87, 88) korreliert ist,
**dadurch gekennzeichnet, dass**
das auf der erfassten Spannung (V_sns; 43-46; 77, 78; 87, 88) basierende Ermitteln durch eine Steuereinrichtung (14) erfolgt, wobei das Ermitteln ein Ermitteln eines Spannungspeaks (44, 46; 78; 88) umfasst, der zeitlich koordiniert mit dem getakteten Schalten auftritt,
wobei die Steuereinrichtung (14) Energie für einen Betrieb der Steuereinrichtung (14) von einem Transformator (28, 29, 72) empfängt, der Energie zwischen der primärseitigen Schaltung (20; 50; 70; 80) und der sekundärseitigen Schaltung (30) überträgt, und
wobei die Spannung (V_sns; 77, 78; 87, 88) in einer Versorgungsschaltung (71; 81) erfasst wird, die Energie für den Betrieb der Steuereinrichtung (14) zu der Steuereinrichtung (14) überträgt.

2. Verfahren nach Anspruch 1,
wobei das Ermitteln umfasst: Detektieren einer offenen Schaltung am Ausgang (35) der sekundärseitigen Schaltung (30) und/oder eines Kurzschlusses am Ausgang (35) der sekundärseitigen Schaltung (30) abhängig von der in der primärseitigen Schaltung (20; 50; 70; 80) erfassten Spannung (V_sns; 43-46; 77, 78; 87, 88).

3. Verfahren nach Anspruch 2,
wobei ein Fehlermanagement eingeleitet wird, wenn eine offene Schaltung am Ausgang der sekundärseitigen Schaltung (30) und/oder ein Kurzschluss am Ausgang (35) der sekundärseitigen Schaltung (30) detektiert wird.

4. Verfahren nach einem der vorhergehenden Ansprüche,
wobei das Ermitteln umfasst: Detektieren einer Last (3; 5), die mit dem Ausgang (35) der sekundärseitigen Schaltung (30) verbunden ist, abhängig von der in der primärseitigen Schaltung (20; 50; 70; 80) erfassten Spannung (V_sns; 43-46; 77, 78; 87, 88),
wobei das getaktete Schalten abhängig von der erkannten Last (3; 5) durchgeführt wird.

5. Verfahren nach Anspruch 4,
wobei das Detektieren der Last (3; 5) umfasst: Erkennen einer Anzahl von LEDs, die mit dem Ausgang der sekundärseitigen Schaltung (30) verbunden sind, abhängig von der in der primärseitigen Schaltung (20; 50; 70; 80) erfassten Spannung (V_sns; 43-46; 77, 78; 87, 88).

6. Verfahren nach einem der vorhergehenden Ansprüche,
wobei die Ausgangsspannung der sekundärseitigen Schaltung (30) auf einen Sollwert geregelt wird, wobei die in der primärseitigen Schaltung (20; 50; 70; 80) erfasste Spannung (V_sns; 43-46; 77, 78; 87, 88) als Regelgröße verwendet wird.

7. Wandler für ein Leuchtmittel (3; 5), umfassend
eine primärseitige Schaltung (20; 50; 70; 80) mit einer Halbbrückenschaltung, die zwei wechselseitig getaktete Schalter (21, 22) aufweist, und mit einem LLC-Resonanzkreis (25-27), der mit einem Knoten zwischen den zwei Schaltern (21, 22) gekoppelt ist, und
eine sekundärseitige Schaltung (30) mit einem Ausgang zur Energieversorgung des Leuchtmittels (3; 5), wobei die sekundärseitige Schaltung (30) von der primärseitigen Schaltung (20; 50; 70; 80) durch eine SELV-Barriere (39) getrennt ist,
wobei der Wandler eingerichtet ist, um eine Spannung (V_sns; 43-46; 77, 78; 87, 88) in der primärseitige Schaltung (20; 50; 70; 80) zu erfassen, und um eine Ausgangsspannung der sekundärseitigen Schaltung (30) basierend auf der erfassten Spannung (V_sns; 43-46; 77, 78; 87, 88) zu ermitteln, wobei zwischen der Ausgangsspannung der sekundärseitigen Schaltung (30) und der in der primärseitigen Schaltung (20; 50; 70; 80) erfassten Spannung (V_sns; 43-46; 77, 78; 87, 88) eine Korrelation besteht,
**dadurch gekennzeichnet, dass**
der Wandler ferner eine Steuereinrichtung (14) aufweist, welche zu dem auf der erfassten Spannung (V_sns; 43-46; 77, 78; 87, 88) basierenden Ermitteln eingerichtet ist, wobei das Ermitteln ein Ermitteln eines Spannungspeaks (44, 46; 78; 88) umfasst, der zeitlich koordiniert mit dem getakteten Schalten auftritt,
wobei die Steuereinrichtung (14) dazu eingerichtet ist, Energie für einen Betrieb der Steuereinrichtung (14) von einem Transformator (28, 29, 72) zu empfangen, der Energie zwischen der primärseitigen Schaltung (20; 50; 70; 80) und der sekundärseitigen Schaltung (30) übertragen kann, und
wobei die Spannung (V_sns; 77, 78; 87, 88) in einer Versorgungsschaltung (71; 81) erfasst werden kann, die Energie für den Betrieb der Steuereinrichtung (14) zu der Steuereinrichtung (14) übertragen kann.

8. LED-Konverter, umfassend
den Wandler (19; 49; 69; 79) nach Anspruch 7.

## Claims

1. Method of operating an LLC resonant converter (19; 49; 69; 79) for a luminaire (3; 5), wherein the LLC resonant converter (19; 49; 69; 79) comprises a primary side circuit (20; 50; 70; 80) and a secondary side circuit (30) that is galvanically isolated by a SELV barrier (39), wherein it comprises:
- clocked switching of a first switch (21) and a second switch (22) of a half-bridge circuit to which is connected an LLC resonant circuit (25-27) of the primary side circuit (20; 50; 70; 80);
- detecting a voltage (V_sns; 43-46; 77, 78; 87, 88) in the primary side circuit (20; 50; 70; 80); and
- determining an output voltage of the secondary side circuit (30) based on the detected voltage (V_sns; 43-46; 77, 78; 87, 88), wherein the output voltage of the secondary side circuit (30) is correlated with the voltage (V_sns; 43-46; 77, 78; 87, 88) in the primary side circuit (20; 50; 70; 80),
**characterized in that**
the determination based on the detected voltage (V_sns; 43-46; 77, 78; 87, 88) is performed by a control device (14), wherein the determination comprises the determination of a voltage peak (44, 46; 78; 88), which is temporally coordinated with the clocked switching,
wherein the control device (14) receives energy for operation of the control device (14) from a transformer (28, 29, 72) that transfers energy between the primary side circuit (20; 50; 70; 80) and the secondary side circuit (30), and
wherein the voltage (V_sns; 77, 78; 87, 88) is detected in a supply circuit (71, 81) which transfers energy to the control device (14) for operation of the control device (14).

2. Method according to claim 1, wherein the determination comprises: detection of an open circuit at the output (35) of the secondary side circuit (30) and/or a short circuit at the output (35) of the secondary side circuit (30) depending on the voltage (V_sns; 43-46; 77, 78; 87, 88) detected in the primary side circuit (20; 50; 70; 80).

3. Method according to claim 2, wherein fault management is initiated upon detection of an open circuit at the output of the secondary side circuit (30) and/or a short circuit at the output (35) of the secondary side circuit (30).

4. Method according to any one of the preceding claims,
wherein the determination comprises detecting a load (3; 5) connected to the output (35) of the secondary side circuit (30) depending on the voltage (V_sns; 43-46; 77, 78; 87, 88) detected in the primary side circuit (20; 50; 70; 80),
wherein the clocked switching is performed depending on the detected load (3; 5).

5. Method according to claim 4, wherein determining the load (3; 5) comprises: the determination of a number of LEDs connected to the output of the secondary side circuit (30) depending on the voltage (V_sns; 43-46; 77, 78; 87, 88) in the primary side circuit (20; 50; 70, 80).

6. Method according to any one of the preceding claims, wherein the output voltage of the secondary-side circuit is regulated with respect to a set point, wherein the voltage (V_sns; 43-46; 77, 78, 87, 88) detected in the primary-side circuit (20; 50; 70; 80) is used as the controlled variable.

7. Converter for a luminaire (3; 5) comprising
a primary-side circuit (20; 50; 70; 80) with a half-bridge circuit comprising two mutually clocked switches (21, 22) and an LLC resonant circuit (25-27) coupled to a node between the two switches (21, 22), and
a secondary side circuit (30) having an output for energizing the luminaire (3; 5), wherein the secondary side circuit (30) is isolated from the primary side circuit (20; 50; 70; 80) by a SELV barrier (39),
wherein the converter is arranged to detect a voltage (V_sns; 43-46; 77, 78; 87, 88) in the primary-side circuit (20; 50; 70; 80) and to determine an output voltage of the secondary-side circuit (30) based on the detected voltage (V_sns; 43-46; 77,78; 87, 88),
wherein there is a correlation between the output voltage of the secondary side circuit (30) and the voltage (V_sns; 43-46; 77, 78; 87, 88) determined in the primary side circuit (20; 50; 70; 80),
**characterized in that**
the converter further comprises a control device (14) that is designed for the determination based on the detected voltage (V_sns; 43-46; 77, 78; 87, 88), wherein the determination comprises the determination of a voltage peak (44, 46; 78, 88) which is temporally coordinated with the clocked switching,
wherein the control device (14) is designed to receive energy from a transformer (28, 29, 72) for operation of the control device (14) in order to transmit energy between the primary side circuit (20; 50; 70; 80) and the secondary side circuit (30), and
wherein the voltage (V_sns; 77, 78; 87, 88) can be determined in a supply circuit (71; 81) that is capable of transferring energy to the control device (14) for operation of the control device (14).

8. LED converter, comprising the transducer (19; 49; 69; 79) according to claim 7.

## Revendications

1. Procédé de commande d'un convertisseur à résonance LLC (19 ; 49 ; 69 ; 79) pour un moyen d'éclairage (3 ; 5), le convertisseur à résonance LLC (19 ; 49 ; 69 ; 79) comprenant un circuit côté primaire (20 ; 50 ; 70 ; 80) et un circuit côté secondaire (30) séparé galvaniquement de celui-ci par une barrière SELV (39), comprenant :
la commutation cadencée d'un premier commutateur (21) et d'un deuxième commutateur (22) d'un circuit en demi-pont, avec lequel un circuit à résonance LLC (25 - 27) du circuit côté primaire (20 ; 50 ; 70 ; 80) est relié ;
mesure d'une tension (V_sns ; 43 - 46 ; 77, 78 ; 87, 88) dans le circuit côté primaire (20 ; 50 ; 70 ; 80) ; et
détermination d'une tension de sortie du circuit côté secondaire (30) sur la base de la tension (V_sns ; 43 - 46 ; 77, 78 ; 87, 88) mesurée, la tension de sortie du circuit côté secondaire (30) étant corrélée avec la tension (V_sns ; 43 - 46 ; 77, 78 ; 87, 88) mesurée dans le circuit côté primaire (20 ; 50 ; 70 ; 80),
**caractérisé en ce que**
la détermination sur la base de la tension (V_sns ; 43 - 46 ; 77, 78 ; 87, 88) mesurée est effectuée par un dispositif de commande (14), la détermination comprenant la détermination d'un pic de tension (44, 46 ; 78 ; 88) qui est coordonné temporellement avec la commutation cadencée,
le dispositif de commande (14) recevant de l'énergie pour un fonctionnement du dispositif de commande (14) d'un transformateur (28, 29, 72) qui transmet une énergie entre le circuit côté primaire (20 ; 50 ; 70 ; 80) et le circuit côté secondaire (30) et
la tension (V_sns ; 43 - 46 ; 77, 78 ; 87, 88) est mesurée dans un circuit d'alimentation (71 ; 81) qui transmet au dispositif de commande (14) l'énergie pour le fonctionnement du dispositif de commande (14).

2. Procédé selon la revendication 1,
la détermination comprenant : la détection d'un circuit ouvert à la sortie (35) du circuit côté secondaire (30) et/ou d'un court-circuit à la sortie (35) du circuit côté secondaire (30) en fonction de la tension (V_sns ; 43 - 46 ; 77, 78 ; 87, 88) mesurée dans le circuit côté primaire (20 ; 50 ; 70 ; 80).

3. Procédé selon la revendication 2,
une gestion d'erreurs étant initiée lorsqu'un circuit ouvert à la sortie (35) du circuit côté secondaire (30) et/ou un court-circuit à la sortie (35) du circuit côté secondaire (30) est détecté.

4. Procédé selon l'une des revendications précédentes
la détermination comprenant : la détection d'une charge (3 ; 5) qui est reliée avec la sortie (35) du circuit côté secondaire (30), en fonction de la tension (V_sns ; 43 - 46 ; 77, 78 ; 87, 88) mesurée dans le circuit côté primaire (20 ; 50 ; 70 ; 80),
la commutation cadencée étant effectuée en fonction de la charge (3 ; 5) détectée.

5. Procédé selon la revendication 4,
la détection de la charge (3 ; 5) comprenant : la détection d'un nombre de LED qui sont reliées avec la sortie du circuit côté secondaire (30), en fonction de la tension (V_sns ; 43 - 46 ; 77, 78 ; 87, 88) mesurée dans le circuit côté primaire (20 ; 50 ; 70 ; 80).

6. Procédé selon l'une des revendications précédentes,
la tension de sortie du circuit côté secondaire (30) étant régulée à une valeur de consigne, la tension (V_sns ; 43 - 46 ; 77, 78 ; 87, 88) mesurée dans le circuit côté primaire (20 ; 50 ; 70 ; 80) étant utilisée comme grandeur de régulation.

7. Convertisseur pour un moyen d'éclairage (3 ; 5) comprenant
un circuit côté primaire (20 ; 50 ; 70 ; 80) avec un circuit en demi-pont qui comprend deux commutateurs (21, 22) commutés de manière alternée, et avec un circuit de résonance LLC (25 - 27) qui est couplé avec un noeud entre les deux commutateurs (21, 22),
un circuit côté secondaire (30) avec une sortie pour l'alimentation en énergie du moyen d'éclairage (3 ; 5), le circuit côté secondaire (30) étant séparé du circuit côté primaire (20 ; 50 ; 70 ; 80) par une barrière SELV (39),
le convertisseur étant conçu pour mesurer une tension (V_sns ; 43 - 46 ; 77, 78 ; 87, 88) dans le circuit côté primaire (20 ; 50 ; 70 ; 80) et pour déterminer une tension de sortie du circuit côté secondaire (30) sur la base de la tension (V_sns ; 43 - 46 ; 77, 78 ; 87, 88) mesurée, une corrélation existant entre la tension de sortie du circuit côté secondaire (30) et la tension (V_sns ; 43 - 46 ; 77, 78 ; 87, 88) mesurée dans le circuit côté primaire (20 ; 50 ; 70 ; 80),
**caractérisé en ce que**
le convertisseur comprend en outre un dispositif de commande (14) qui est conçu pour la détermination sur la base de la tension (V_sns ; 43 - 46 ; 77, 78 ; 87, 88) mesurée, la détermination comprenant la détermination d'un pic de tension (44, 46 ; 78 ; 88) qui est coordonné temporellement avec la commutation cadencée,
le dispositif de commande (14) étant conçu pour recevoir de l'énergie pour un fonctionnement du dispositif de commande (14) d'un transformateur (28, 29, 72) qui permet de transmettre une énergie entre le circuit côté primaire (20 ; 50 ; 70 ; 80) et le circuit côté secondaire (30) et
la tension (V_sns ; 43 - 46 ; 77, 78 ; 87, 88) étant mesurée dans un circuit d'alimentation (71 ; 81) qui transmet au dispositif de commande (14) l'énergie pour le fonctionnement du dispositif de commande (14).

8. Convertisseur à LED comprenant
le convertisseur (19 ; 49 ; 69 ; 79) selon la revendication 7.
